# EUROPÄISCHE PATENTSCHRIFT

(11) **EP 1 563 269 B1**
(45) Veröffentlichungstag und Bekanntmachung des Hinweises auf die Patenterteilung: **12.04.2006**
(21) Anmeldenummer: 03782098.2
(22) Anmeldetag: 19.11.2003
(51) Int. Cl.: G01L 5/00, G01M 13/04

(54) **KRAFTMESSLAGER**
FORCE-SENSING BEARING
PALIER DYNAMOMETRIQUE

(30) Priorität: 23.11.2002 DE 10254814
(43) Veröffentlichungstag der Anmeldung: 17.08.2005
(73) Patentinhaber: FAG Kugelfischer AG & Co. OHG, 97421 Schweinfurt (DE)
(72) Erfinder: KNOKKE, Henri van der, 97464 Niederwerrn (DE); WUNDERLICH, Rainer, 87679 Westendorf (DE); HAUSER, Karin, 87435 Kempten (DE); HOLLWECK, Roman, 87654 Friesenried (DE)
(86) Internationale Anmeldenummer: PCT/DE2003/003829
(87) Internationale Veröffentlichungsnummer: WO 2004/048913

(56) Entgegenhaltungen:
- US-A- 4 203 319

## Beschreibung

### Gebiet der Erfindung

Die Erfindung betrifft ein Wälzlager mit angeordneten Sensoren, mit denen die aktuelle Belastung des Wälzlagers ermittelt werden kann.

In der US 4 667 521 und der US 5,952,587 sind solche Kraftmesslanger beschrieben. In der Figur 10b der US 5 952 587 dieser Schrift ist dargestellt, wie bei einem Kegelrollenlager, die von den Sensoren gemessene Kraft (Materialdehnung) in Radialkräfte und Axialkräfte aufgeteilt wird. Das Problem dieser Lösung besteht darin, dass zur Zerlegung der Kräfte in Radial- und Axialkräfte der Laufbahnwinkel konstant sein muss. Für Wälzlager mit gekrümmten Laufbahnen, wie z. B. Rillenkugellager ist das beschriebene Verfahren nicht anwendbar, um die auf das Wälzlager wirkenden Axial- oder Radialkräfte mit Sensoren, die gegenüber den Laufbahnen angeordnet sind, zu ermitteln.

### Aufgabe der Erfindung

Es besteht also die Aufgabe, eine Sensoranordnung für Wälzlager mit gekrümmten Laufbahnen aufzuzeigen, bei denen sich die gemessenen Kräfte eindeutig in Axial- und Radialkräfte zerlegen lassen.

### Beschreibung der Erfindung

Die Aufgabe wird erfindungsgemäß durch die Merkmale des Anspruches 1 gelöst.

Der Kern der Erfindung besteht darin, dass Sensoren (z. B. DMS - Sensoren) am Außendurchmesser des Außenringes bzw. am Innendurchmesser des Innenringes angeordnet werden, die bei Belastung (Hertz'sche Pressung) der Ringe durch die Wälzkörper je nach axialer Lage in den Laufbahnen des Wälzlagers unterschiedlich lange Zeitsignale erzeugen. Die unterschiedlich langen Signale werden dadurch erzeugt, dass die Länge zweier benachbarter in Umfangsrichtung liegender Leiterbahnabschnitte des DMS - Sensors variiert. Die unterschiedlich langen Zeitsignale bei Belastung sind also proportional zum Kontaktwinkel der Wälzkörper in der Laufbahn der Wälzlagerringe. Bei dieser Anordnung der DMS - Sensoren wird der Effekt genutzt, dass bei Wälzlagern mit gekrümmten Laufbahnen die Wälzkörper bei einer kombinierten Radial - Axialbelastung aus dem Laufbahngrund sich heraus bewegen und eine neue Gleichgewichtslage außerhalb des Laufbahngrundes einnehmen. Je höher die Axialbelastung wird, desto weiter weicht der Wälzkörper aus dem Laufbahngrund Richtung Seitenfläche des Wälzlagers. Damit verschiebt sich auch die Druckellipse zwischen Wälzlagerring und Wälzkörper in axialer Richtung. Die Druckellipse führt auch zu einer Längenveränderung in Umfangsrichtung im Material des Wälzlagerringes. Die Sensoren, die in axialer Richtung unterschiedlich breit sind, erfassen somit die Längenveränderung im Material - beim Durchrollen des Wälzkörpers - unterschiedlich lang. Die Länge der Belastung eines Sensors kann über die Kenntnis der Geometrie des Wälzlagers in radiale und axiale Kräfte umgerechnet werden.
Da die Belastungsdauer eines Sensors auch von der Drehzahl des Wälzlagers abhängig ist, wird über den Zeitabstand, den zwei benachbarte Wälzkörper benötigen, um einen Sensor zu belasten, die Drehzahl ermittelt.
Der Vorteil von Anspruch 3 besteht darin, das bei dieser Anordnung handelsübliche rechteckige DMS - Sensoren eingesetzt werden können.

### Beschreibung der Figuren

Die Erfindung wird anhand von 6 Figuren beschrieben.

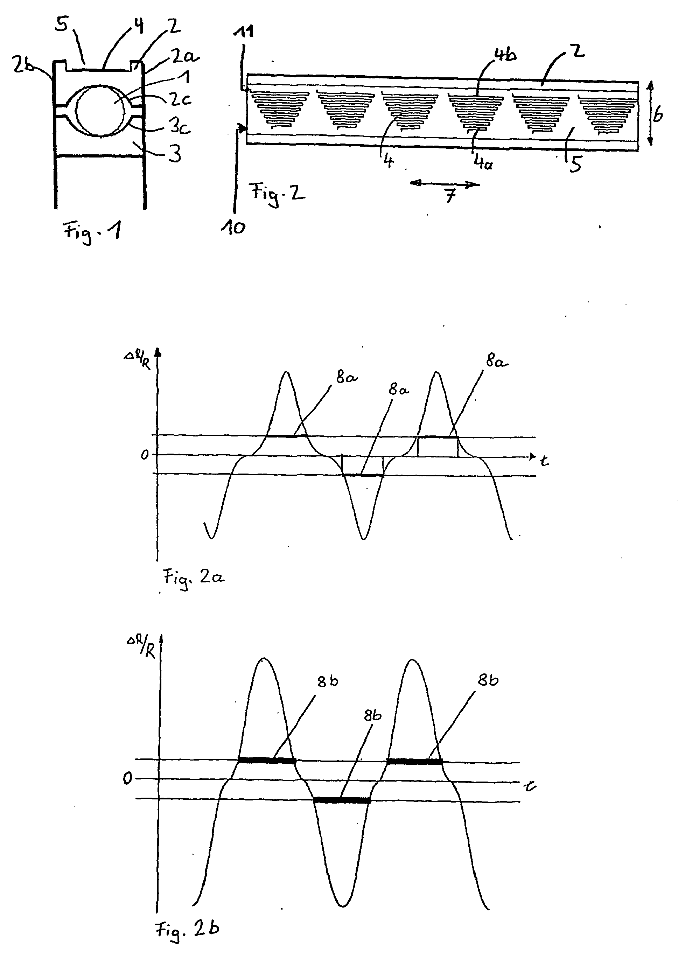

In der Figur 1 wird ein Wälzlager mit gekrümmten Laufbahnen (hier ein Rillenkugellager)-dargestellt. Der Wälzkörper 1 ist zwischen den beiden Laufringen 2 und 3 angeordnet. In dieser Darstellung befindet sich der Wälzkörper genau in der mittleren Lage des Wälzlagers. Bei Belastung wandert dieser Wälzkörper in axialer Richtung zur Seitenfläche 2a oder 2b des Wälzlagers, wobei dies von der Kraftrichtung der axialen Kräfte abhängt. Die Sensoren 4 sind in diesem Beispiel in einer Nut 5 am Außenring 2 angeordnet. Nicht dargestellt ist die analoge Anordnung der Sensoren 4 in einer Nut am lnnenring 3.

Die Figuren 2 bis Figur 5 zeigen spezielle Sensoranordnungen, die in der Nut 4 am Außenring 2 und/oder am Innenring 3 angeordnet sind. Um die Anordnung der Sensoren besser zu erkennen, sind die Wälzlagerringe abgewickelt dargestellt. Die Sensoren 4 sind hier in der bevorzugten Ausführungsform eines Dehnungsmess-Streifens in trapezförmiger Anordnung dargestellt. Die Leiterbahnabschnitte des DMS-Sensors 4a bzw. 4b sind in axialer Richtung 6 unterschiedlich lang ausgeführt. Aus dieser Darstellung wird sofort deutlich, dass ein Wälzkörper, der sich in axialer Richtung 6 aus dem Laufbahngrund heraus sich bewegt, die Sensoren 4 unterschiedlich lang (zeitlich) belastet. Die Länge des Zeitsignals eines Sensors ist somit proportional zur Winkellage des Wälzkörpers 1 in den Wälzlagerringen 2 oder 3. Da die Sensoren 4 normalerweise zu Wheatstone -Brücken verschaltet werden, ist die Dauer des Ausgangssignals der Wheatstone - Brücke somit proportional zum Kontaktwinkel des Wälzkörpers 1 in der Laufbahn der Wälzlagerringe 2 oder 3. Eine bevorzugte Ausführungsform stellt hierbei die Anordnung der DMS - Sensoren in einem Abstand im Wälzlagerring dar, der dem halben Abstand zweier benachbarter Wälzkörper entspricht.
In der Fig. 2b sind die Ausgangssignale der Wheatstone - Brücke für den Fall dargestellt, dass der Wälzkörper im Bereich der kurzen Leiterbahnabschnitte 4a unter dem DMS - Sensor hindurchrollt. Die Lage der unter den Sensoren hindurchrollenden Wälzkörper ist mit dem Pfeil 10 gekennzeichnet. Die Periodendauer 8a der Signale ist entsprechend kurz.
In der Fig. 2c sind die Ausgangssignale der Wheatstone - Brücke für den Fall dargestellt, dass der Wälzkörper im Bereich der langen Leiterbahnabschnitte unter dem DMS - Sensor hindurchrollt. Die Lage der unter den Sensoren hindurchrollenden Wälzkörper ist mit dem Pfeil 11 gekennzeichnet. Die Periodendauer 8b der Signale ist entsprechend lang. Die Periodendauer ist bei bekannter Drehzahl des Wälzlagers also proportional zur Winkellage der Wälzkörper in der Laufbahn.

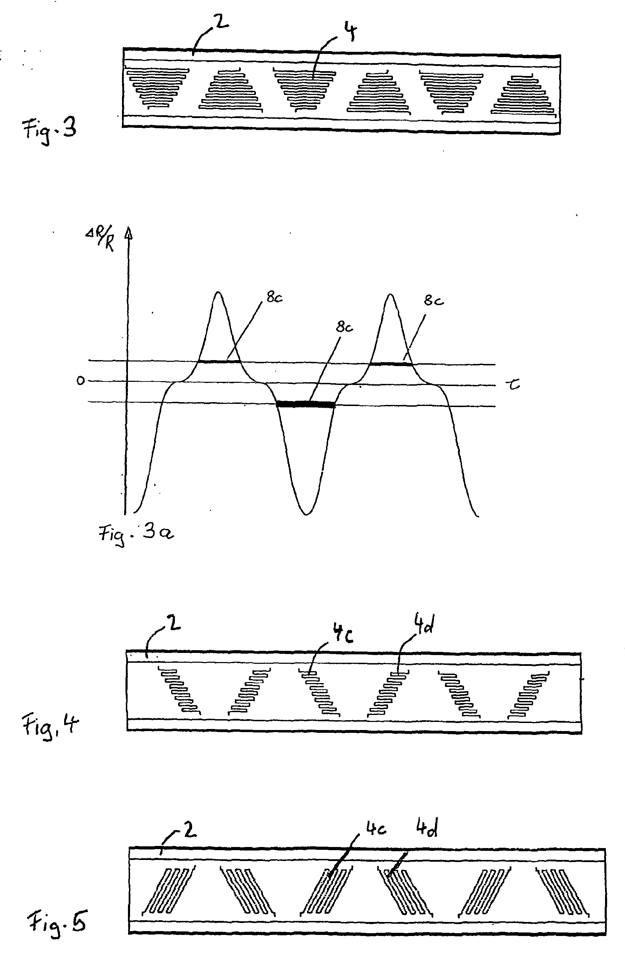

Bei der Sensoranordnung in der Figur 3 wird die Winkellage der Wälzkörper in der Laufbahn durch eine Mittelwertbildung der langen und kurzen Periodendauer im Ausgangssignal der Wheatstone - Brücke ermittelt. In der Figur 3a ist das Ausgangssignal der Wheatstone - Brücke dargestellt. Die abwechselnde Periodendauer 8c ist gekennzeichnet.

Bei den Sensoranordnungen in der Figur 4 und 5 ist der Zeitabstand zwischen dem Belasten werden zweier benachbarten Sensoren 4c, 4d proportional zur Winkellage des Wälzkörpers 1 in den Laufbahnen 2c, 3c der Wälzlagerringe 2 oder 3. Die Figuren 4 und 5 unterscheiden sich durch unterschiedlich orientierte Leiterbahnabschnitte in den Sensoren (DMS-Sensoren) 4c und 4d. Nicht dargestellt ist der vergleichbare Fall mit Einsatz handelsüblicher DMS-Sensoren mit rechtwinkeliger Grundfläche.

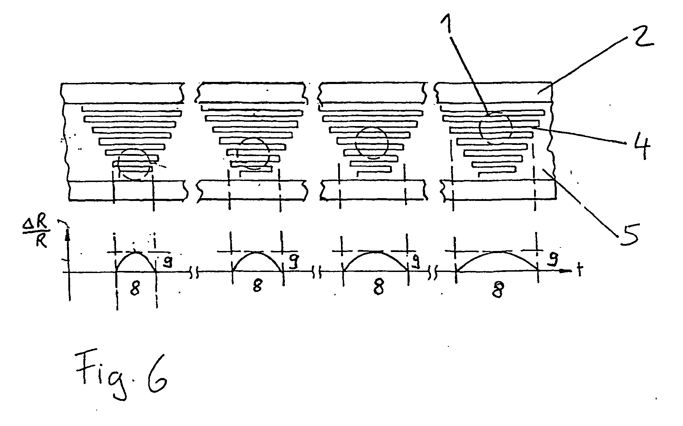

In der Figur 6 ist ein Ausschnitt des Wälzlagerringes mit den Sensoren 4 dargestellt. Der Wälzkörper 1 ist in unterschiedlichen Lagen in der Laufbahn gezeichnet. Das vom Sensor 4 (eines Sensors der Wheatstone - Brücke) ermittelte Signal ist unterhalb des Ausschnittes des Wälzlagerringes abgebildet. An der Ordinate des Koordinatensystems ist die Widerstandsänderung (ΔR/R) im Sensor 4 und an der Abszisse ist die Zeit (t) aufgeführt. Die unterschiedliche Periodendauer 8 in Abhängigkeit von dem Kontaktwinkel der Wälzkörper in der Laufbahn der Wälzlagerringe wird in dieser Darstellung deutlich. Die Höhe des Signals 9 ist proportional zur Belastung des Wälzlagerringes.

### Bezugszeichenliste

- 1: Wälzkörper
- 2: Außenring
- 2a, 2b: Seitenfläche des Außenringes
- 2c: Laufbahn des Außenringes
- 3: Innenring
- 3c: Laufbahn des Innenringes
- 4: Sensoren
- 4a, 4b: unterschiedlich lange Leiterbahnen des Sensors ,
- 4c, 4d: Sensoren gleicher Breite
- 5: Nut im Außen- oder lnnenring
- 6: axiale Richtung des Wälzlagers
- 7: Umfangsrichtung des Außen- oder innenringes
- 8: Periodendauer des Signals
- 8a: Kurze Periodendauer des Signals
- 8b: Lange Periodendauer des Signals
- 8c: Kurze und lange Periodendauer aufeinanderfolgend im Signal der Wheatstone - Brücke
- 9: entspricht der Dehnung des Materials und ist proportional zur Höhe der Belastung des Wälzlagerringes
- 10, 11: Lage der unter dem Sensor hindurchrollenden Wälzkörper

## Patentansprüche

1. Wälzlager mit gekrümmten Laufbahnen (2c, 3c) und dazwischen angeordneten Wälzkörpern (1) und DMS - Sensoren (4), die in einer Nut (5) am Außendurchmesser des Außenrings (2) und / oder am Innendurchmesser des Innenrings (3) angeordnet sind, **dadurch gekennzeichnet, dass** die Länge zweier benachbarter Leiterbahnabschnitte des DMS - Sensors variiert.

2. Wälzlager mit gekrümmter Laufbahn nach Anspruch 1, **dadurch gekennzeichnet, dass** die benachbarten Leiterbahnabschnitte so angeordnet sind, dass der DMS - Sensoren (4) trapezförmig ausgeführt sind.

3. Wälzlager mit gekrümmten Laufbahnen (2c, 3c) und dazwischen angeordneten Wälzkörpern (1) und Sensoren (4), die in einer Nut (5) am Außendurchmesser des Außenrings (2) oder Innendurchmesser des lnnenrings (3) angeordnet sind, **dadurch gekennzeichnet, dass** der Abstand zwischen zwei benachbarten Sensoren (4c, 4d) in axialer Richtung (6) variiert.

## Claims

1. Rolling bearing comprising curved raceways (2c, 3c) and, arranged inbetween, rolling bodies (1) and strain gauge sensors (4), which are arranged in a groove (5) on the outer diameter of the outer ring (2) and/or on the inner diameter of the inner ring (3), **characterized in that** the length of two adjacent conductor track sections of the strain gauge sensor varies.

2. Rolling bearing comprising a curved raceway according to Claim 1, **characterized in that** the adjacent conductor track sections are arranged such that the strain gauge sensors (4) are embodied trapezoidally.

3. Rolling bearing comprising curved raceways (2c, 3c) and, arranged inbetween, rolling bodies (1) and sensors (4), which are arranged in a groove (5) on the outer diameter of the outer ring (2) or on the inner diameter of the inner ring (3), **characterized in that** the distance between two adjacent sensors (4c, 4d) in the axial direction (6) varies.

## Revendications

1. Palier à roulement avec des pistes de roulement incurvées (2c, 3c) et des corps de roulement (1) disposés entre celles-ci, et des détecteurs à jauges de contrainte DMS (4), qui sont placés dans une rainure (5) sur le diamètre extérieur de la bague extérieure (2) et/ou sur le diamètre intérieur de la bague intérieure (3), **caractérisé en ce que** la longueur de deux parties de piste conductrice voisines du détecteur DMS varie.

2. Palier à roulement avec piste de roulement incurvée selon la revendication 1, **caractérisé en ce que** les parties de piste conductrice voisines sont disposées de telle façon que les détecteurs DMS (4) soient réalisés sous forme de trapèzes.

3. Palier à roulement avec des pistes de roulement incurvées (2c, 3c) et des corps de roulement (1) disposés entre celles-ci, et des détecteurs (4) qui sont placés dans une rainure (5) sur le diamètre extérieur de la bague extérieure (2) ou sur le diamètre intérieur de la bague intérieure (3), **caractérisé en ce que** la distance entre deux détecteurs voisins (4c, 4d) varie dans la direction axiale (6).
